# EUROPÄISCHE PATENTSCHRIFT

(11) **EP 2 010 466 B1**
(45) Veröffentlichungstag und Bekanntmachung des Hinweises auf die Patenterteilung: **26.08.2009**
(21) Anmeldenummer: 07724536.3
(22) Anmeldetag: 24.04.2007
(51) Int. Cl.: C04B 41/48

(54) **VERFAHREN ZUR VERHINDERUNG DER BEIM VERFUGEN VON PFLASTERSTEINBELÄGEN AUFTRETENDEN FLECKENBILDUNG**
METHOD OF PREVENTING THE SPOT FORMATION WHICH OCCURS WHEN JOINING PAVING STONES
PROCÉDÉ PERMETTANT D'ÉVITER LA FORMATION DE TACHES SURVENANT LORS DU JOINTOIEMENT DES REVÊTEMENTS PAVÉS

(30) Priorität: 25.04.2006 DE 102006019006
(43) Veröffentlichungstag der Anmeldung: 07.01.2009
(73) Patentinhaber: Construction Research and Technology GmbH, 83308 Trostberg (DE)
(72) Erfinder: KAISER, Robert, 89331 Burgau (DE); EISENREICH, Andreas, 71717 Beilstein (DE); GLASER, Werner, 86167 Augsburg (DE); GRAF, Wilhelm, 86199 Augsburg (DE)
(74) Vertreter: Dey, Michael
(86) Internationale Anmeldenummer: PCT/EP2007/003606
(87) Internationale Veröffentlichungsnummer: WO 2007/121991

(56) Entgegenhaltungen:
- DE-A1- 4 421 970
- US-A- 5 740 653

## Beschreibung

Die vorliegende Erfindung betrifft ein Verfahren zur Verminderung oder Verhinderung der Fleckenbildung, die beim Verfugen von Pflastersteinbelägen mit Reaktionsharzmörteln auf der Oberfläche der entsprechenden Pflastersteine auftritt.

Geh- und Fahrwege werden häufig mit Pflastersteinen versehen. Dabei werden die Pflastersteine in einem Kies- oder Sandbett unter Ausbildung von Fugen verlegt. Solche Pflastersteine bestehen in der Regel aus Klinker sowie bevorzugt aus Natur- und Betonsteinen. Bei üblichen Pflastersteinbelägen erfolgt die Verfugung nach wie vor im Allgemeinen durch lose Sandfüllung oder mittels Zement-gebundenen Fugenmörteln. Nachteilig bei der Verfugung mit losem Sand ist, dass beim Reinigen durch Kehrmaschinen oder Besen die Sandfüllung allmählich wieder entfernt wird. Weiter kann der Sand auch durch Regenwasser aus den Fugen gespült werden. Bei der Verfugung mit Zementmörtel wird durch den Einfluss von Frost-Tau-Wechseln oder durch mechanische Belastungen das starre Fugenmaterial geschädigt und ist somit nicht dauerhaft funktionsfähig.

In jüngerer Zeit werden auch Reaktionsharz-gebundene Verfugungsmassen angeboten, die sehr dauerhaft sind. Unter Reaktionsharzfugenmörtel werden hierbei solche Mörtel verstanden, die als Bindemittel reaktive Harze aufweisen. Diese Fugenmörtel sind nicht wässrig, d. h. sie enthalten keinen Wasseranteil, der größer als 5 Gew.-% ist, bzw. die äußere Phase bei Harz-/Wasser-Dispersionssystemen stellt nicht Wasser dar, sondern ein Harz.

Reaktionsharzfugenmörtel können ein- oder zweikomponentig vorliegen und werden z. B. in DE 44 21 970 A1 beschrieben. Als Bindemittel solcher Reaktionsharzmörtel kommen z. B. Polybutadien-, Polyurethan- oder bevorzugt Epoxidharze zum Einsatz. Nachteilig bei der Verwendung solcher Reaktionsharzmörtel ist die Tatsache, dass beim Einbringen und Verfugen der Pflasterflächen mit solchen Mörteln die Pflastersteine zwangsläufig durch das darin enthaltene Bindemittel verschmutzt werden.

US 5 740 653 beschreibt ein Verfahren zum Verfugen von Fliesen, bei dem eine selbstklebende Schutzfolie vor dem Verfugen aufgebracht und danach wieder entfernt wird.

Je nach Oberflächenstruktur und Porosität des verwendeten Pflastersteins wird durch die erwähnte Verschmutzung das optische Erscheinungsbild durch so genannte Anfeuerung oder gar Fleckenbildung nachteilig beeinflusst. Der Mörtel hinterlässt einen Bindemittelfilm auf den Steinoberflächen. Es wird deshalb in der Regel vom Hersteller entsprechender Mörtel empfohlen, die Farbänderung vor der Verfugung an einem Muster zu begutachten. Generell bewirkt der Film erst einmal eine Intensivierung der Steinfarbe (Anfeuerung) und hinterlässt einen Glanz, der durch Witterungseinflüsse und Abnutzung - oft in Streifen aufgrund unterschiedlicher Belastung - über einen längeren Zeitraum verteilt abnimmt. Verwitterungserscheinungen können bei einzelnen Steinsorten zu einem dauerhaft schmierig-öligen Aussehen der Steinoberfläche führen.

Der vorliegenden Erfindung lag daher die Aufgabe zugrunde, ein Verfahren bereitzustellen, das eine einfache und schnelle Verfugung von Pflastersteinen mit Reaktionsharzmörteln ermöglicht und die geschilderten Nachteile der Anfeuerung und Fleckenbildung auf den Pflastersteinen zuverlässig verhindert.

Diese Aufgabe wurde erfindungsgemäß durch das Verfahren entsprechend dem vorliegenden Hauptanspruch gelöst. Es hat sich nämlich überraschenderweise gezeigt, dass man mit Hilfe der erfindungsgemäß vorgeschlagenen Schutzschicht (A) die Fleckenbildung auf den Pflastersteinen zuverlässig verhindern kann.

Beim Verfahren entsprechend der vorliegenden Erfindung wird vor der Verfugung des Pflastersteinbelages mit Kunstharzmörtel auf die Oberfläche der Pflastersteine eine Schutzschicht (A) aufgebracht, vorzugsweise durch Aufsprühen, Rollen, Streichen oder Bürsten .

Die Schutzschicht (A) enthält erfindungsgemäß folgende Komponenten:
A₁) 5 bis 99,5 Gew.-% eines wasserlöslichen und/oder in Wasser dispergierbaren Polymers,
A₂) 0,5 bis 35 Gew.-% eines Verdunstungsbeschleunigers, ausgewählt aus der Gruppe Alkohole, Glykolether, Ketone sowie beliebige Mischungen davon,
A₃) ggf. als Rest Wasser.

Geeignete wasserlösliche Polymere sind wasserlösliche Polyvinylalkohole, Polysaccharide wie z. B. Celluloseether oder Stärkeether sowie Polyacrylamide.

Bevorzugte Ausführungsformen für die Komponente A₁) sind anionische und/oder kationische Stärkeether und/oder Celluloseether oder Gemische davon.

Besonders bevorzugte Celluloseether sind Methyl-, Hydroxymethyl-, Hydroxyethyl-, Hydroxypropyl- und Carboxyethylcelluloseether.

Aus der Gruppe der anionischen Stärkeether werden insbesondere Hydroxyethyl-, Hydroxypropyl- und Carboxyethylether eingesetzt, während bei den kationischen Stärkeethern insbesondere Stärkephosphonate verwendet werden.

Die Art der eingesetzten Stärkeether ist hierbei weitgehend unkritisch, doch haben sich Derivate auf Basis von Mais- oder Kartoffelstärke als besonders vorteilhaft erwiesen.

Auch bei den Polyvinylalkoholen können die unterschiedlichsten Typen zum Einsatz kommen. Gemäß einer bevorzugten Ausführungsform werden Polyvinylalkohole mit einem Hydrolysegrad (Verseifungsgrad) von 50 bis 95 Mol-%, bevorzugt von 70 bis 90 Mol-% und besonders bevorzugt zwischen 80 und 90 Mol-%, und einer Esterzahl nach DIN 53401 zwischen 1 und 300 mg KOH/g, bevorzugt zwischen 150 und 250 mg KOH/g verwendet.

Als weitere Komponente A₁), d. h. in Wasser dispergierbare Polymere, kommen die so genannten redispergierbaren Polymerpulver (Dispersionspulver) und wässrige Polymerdispersionen in Frage. Eingeschlossen sind hierbei Dispersionen von Polymeren wie Natur-(Kautschuklatex) und Synthesekautschuk (Syntheselatex) als auch von Kunstharzen (Kunstharzdispersionen) und Kunststoffen (Kunststoffdispersionen) wie Polymerisaten, Polykondensaten und Polyadditionsverbindungen. Man unterscheidet Primärdispersionen, bei welchen die Polymerisation der Basismonomeren direkt in der flüssigen Phase erfolgt (Suspensionspolymerisation oder Emulsionspolymerisation, z. B. von Vinylacetat oder Acrylaten), und Sekundärdispersionen, bei welchen vorgefertigte Polymere in einem zweiten Verfahrensschritt dispergiert werden (Dispersionen z. B. von Polyisobuten, Siliconharzen, Polyurethanen, Polyvinylethern).

Bevorzugt sind die nach dem Stand der Technik mit Hilfe des Emulsionspolymerisations-Verfahrens gewonnen Polymerdispersionen und Dispersionspulver. Solche Emulsionspolymerisate basieren in der Regel auf den Monomeren Vinylacetat, Ethylen, Styrol, Versatat, Butadien, Chloropren, Acrylsäure und Acrylsäureester oder Gemischen davon. Aber auch andere Monomere sind hier möglich.

Aus der Gruppe der Verdunstungsbeschleuniger sind Alkohole (wie z. B. Ethanol, Isopropanol, n-Propanol, Diacetonalkohol), Glykolether (wie z. B. Propylenglykol-Monomethylether, Propylenglykol-n-Butylether, Dipropylenglykol-n-Butylether) oder Ketone (wie z. B. Aceton) sowie beliebige Mischungen davon als bevorzugt anzusehen.

Es ist im Rahmen der vorliegenden Erfindung außerdem möglich, dass die Schutzschicht (A) zusätzlich zu den Komponenten A₁), A₂) und A₃) noch 0,1 bis 10 Gew.-% Additive, wie Wachsdispersionen/-emulsionen, Emulgatoren, Imprägniermittel, Netzmittel, Konservierungsmittel und oberflächenaktive Substanzen enthält.

Die Komponente A₁) sowie ggf. die Additive bilden nach dem Evaporieren der Komponenten A₂) und A₃) einen dichten und kratzfesten Film auf der Oberfläche der Pflastersteine.

In einer bevorzugten Ausführungsform beträgt die Trocknungszeit 20 min bis 2 h, stärker bevorzugt 30 min bis 1,5 h und besonders bevorzugt 30 min bis 60 min.

Nach der Trocknung bzw. Filmbildung der Schutzschicht (A) auf den Pflastersteinen wird mit einem Reaktionsharzmörtel in üblicher Verarbeitungsweise (d. h. mittels einem Gummischieber eingearbeitet oder mit einem Besen eingekehrt) die Verfugung vorgenommen.

Nach der Aushärtung des Reaktionsharzmörtels wird dann die Endreinigung der Pflasteroberfläche vorgenommen. Dies geschieht vorzugsweise mit Hilfe von Wasser als Reinigungsmittel und handelsüblichen Reinigungsgeräten wie z. B. Dampfstrahlreiniger oder Hochdruckreiniger. Durch das Wasser wird die Schutzschicht (A) angelöst und diese, z. B. durch den Druckstrahl des Reinigungsgerätes, von der Steinoberfläche mit den Fugenmörtelresten zuverlässig und rückstandslos entfernt.

Die nachfolgenden Beispiele sollen die Erfindung näher veranschaulichen.

### Beispiele

### Ausführungsbeispiele

### Es wurden folgende Komponenten gemischt

### Beispiel 1

| | |
|---|---|
| Polyvinylalkohol (Hydrolysezahl 82,6 ± 2,2 Mol-% und Esterzahl nach DIN 53401 von 190 ± 20 mg KOH/g) | 20 Gew.-% |
| Wasser | 58 Gew.-% |
| Verdunstungsbeschleuniger (Ethanol) | 22 Gew.-% |

### Beispiel 2

| | |
|---|---|
| anionischer Stärkeether (Hydroxypropylether) | 3,7 Gew.-% |
| Wasser | 92,8 Gew.-% |
| Verdunstungsbeschleuniger (Ethanol) | 3,5 Gew.-% |

Drei Probeflächen bestehend aus Granit-Pflastersteinen verlegt im Sandbett, wurden hergestellt.

Die Fugenbreiten zwischen den Pflastersteinen betrugen ca. 2 bis 4 cm.

Die Schutzschicht (A) wurde gemäß Beispiel 1 und 2 mit einem Flächenstreicher auf je eine Pflasterfläche aufgebracht (Verbrauch Beispiel 1: 47 g/m²; Beispiel 2: 49 g/m²).

Nach einer Trocknungszeit von ca. 30 bis 40 Minuten wurde ein Reaktionsharzfugenmörtel (Epoxidharz-Fugenmörtel) mit einem Gummischieber großflächig in die Fugen eingebracht.

Nach Aushärtung des Kunstharzfugenmörtels (24 h) wurden die Flächen mit einem Hochdruckreiniger gereinigt.

Eine dritte Probefläche wurde nicht mit Fleckschutz versehen und wie oben beschrieben ebenfalls mit Kunstharzfugenmörtel verfugt. Im Unterschied zu den beiden erfindungsgemäßen Beispielen wurde hier unmittelbar nach Einbringen des Mörtels die Fläche durch Waschen mit Wasser mit Hilfe eines Schwammes gereinigt, was dem bisherig üblichen Vorgehen entspricht.

### Ergebnis:

Die Probefläche ohne Fleckschutz war noch nach Stunden klebrig. Nach dem Aushärten des Fugenmörtels verblieb ein Glanz auf der Steinoberfläche. Die Optik ist durch den anhaftenden Harzschleier negativ verändert worden; es zeigten sich ungleichmäßige Fleckenbildungen.

Die Probeflächen, die nach dem erfindungsgemäßen Verfahren behandelt wurden, zeigten keinerlei optische Veränderung der Pflastersteine und keine Flockenbildung.

## Patentansprüche

1. Verfahren zur Verminderung oder Verhinderung der beim Verfugen von Pflastersteinbelägen mit Reaktionharzmörteln auf der Oberfläche der Pflastersteine auftretenden Fleckenbildung, **dadurch gekennzeichnet, dass** man
a) vor der Verfugung auf die Pflastersteine eine Schutzschicht (A) aufbringt, bestehend aus
A₁) 5 bis 99,5 Gew.-% eines wasserlöslichen und/oder in Wasser dispergierbaren Polymers,
A₂) 0,5 bis 35 Gew.-% eines Verdunstungsbeschleunigers, ausgewählt aus der Gruppe Alkohole, Glykolether, Ketone sowie beliebige Mischungen davon,
A₃) ggf. als Rest Wasser,
b) nach der Trocknung der Schutzschicht (A) den Reaktionsharzmörtel einbringt
und
c) nach dem Aushärten des Reaktionsharzmörtels die Schutzschicht (A) zusammen mit den anhaftenden Reaktionsharz-Resten vorzugsweise mit Hilfe von Wasser abreinigt.

2. Verfahren nach Anspruch 1, **dadurch gekennzeichnet, dass** die Komponente A₁) ein wasserlösliches Polymer ausgewählt aus der Gruppe Polyvinylalkohle, Polysaccharide oder Polyacrylamide oder Gemische davon enthält.

3. Verfahren nach einem der Ansprüche 1 oder 2, **dadurch gekennzeichnet, dass** die Komponente A₁) einen anionischen und/oder kationischen Stärkeether, und/oder Celluloseether darstellt.

4. Verfahren nach Anspruch 3, **dadurch gekennzeichnet, dass** als Komponente A₁) ein Celluloseether ausgewählt aus der Gruppe Methyl-, Hydroxymethyl-, Hydroxyethyl-, Hydroxypropyl- sowie Carboxymethylcelluloseether oder Gemische davon verwendet werden.

5. Verfahren nach einem der Ansprüche 1 bis 4, **dadurch gekennzeichnet, dass** die Komponente A₁) einen anionischen Stärkeether ausgewählt aus der Gruppe Hydroxyethyl-, Hydroxypropyl- und Carboxyethylether oder kationischen Stärkeether wie Stärkephosphonate oder Gemische davon enthält.

6. Verfahren nach Anspruch 5, **dadurch gekennzeichnet, dass** als Stärkeether Derivate auf Basis von Mais oder Kartoffelstärke oder Gemische davon eingesetzt werden.

7. Verfahren nach einem der Ansprüche 1 bis 6, **dadurch gekennzeichnet, dass** die Komponente A₁) einen Polyvinylalkohol mit einem Verseifungsgrad von 70 bis 90 Mol-% und einer Esterzahl nach DIN 53401 zwischen 1 und 300 mg KOH/g darstellt.

8. Verfahren nach einem der Ansprüche 1 bis 7, **dadurch gekennzeichnet, dass** als Komponente A₁) in Wasser dispergierbare Polymere wie redispergierbare Polymerpulver und/oder wässrige Polymerdispersionen auf Basis Vinylacetat-, Ethylen-, Styrol-, Versatat-, Butadien-, Chloropren-, Acrylsäure- und Acrylsäureester-Monomeren eingesetzt werden.

9. Verfahren nach einem der Ansprüche 1 bis 8, **dadurch gekennzeichnet, dass** die Komponente A₂) aus einem Alkohol, ausgewählt aus der Gruppe Ethanol, Isopropanol, n-Propanoi sowie Diacetonalkohol oder beliebigen Mischungen davon, besteht.

10. Verfahren nach einem der Ansprüche 1 bis 9, **dadurch gekennzeichnet, dass** als Komponente A₂) ein Glykolether auf Basis von Propylenglykol-Monomethylether, Propylenglykol-n-Butylether, Dipropylenglykol-n-Butylether oder beliebige Mischungen davon verwendet werden.

11. Verfahren nach einem der Ansprüche 1 bis 10, **dadurch gekennzeichnet, dass** in der Schutzschicht (A) zusätzlich zu den Komponenten A₁), A₂) und gegebenenfalls A₃) noch 0,1 bis 10 Gew.-% Additive, wie Wachsdispersionen/-Emulsionen, Emulgatoren, Imprägniermittel, Verdickungsmittel, Netzmittel, Konservierungsmittel und oberflächenaktive Substanzen, enthalten sind.

12. Verfahren nach einem der Ansprüche 1 bis 11, **dadurch gekennzeichnet, dass** die Schutzschicht (A) nach Verdunstung des Wassers oder des Verdunstungsbeschleunigers einen geschlossenen Film bildet.

13. Verfahren nach einem der Ansprüche 1 bis 12, **dadurch gekennzeichnet, dass** man die Abreinigung in Stufe c) mit Dampfstrahl-oder Hochdruckreinigern vornimmt.

## Claims

1. Method for reducing or preventing the spot formation which occurs when joining paving stone coverings with reactive resin mortars on the surface of the paving stones, **characterized in that**
a) a protective layer (A) consisting of
A₁) 5 to 99.5% by weight of a water-soluble and/or water-dispersible polymer,
A₂) 0.5 to 35% by weight of an evaporation accelerator selected from the group consisting of alcohols, glycol ethers, ketones and any mixtures thereof,
A₃) optionally water as remainder
is applied to the paving stones prior to joining,
b) the reactive resin mortar is introduced after drying of the protective layer (A)
and
c) the protective layer (A) together with the adhering reactive resin residues is removed by cleaning, preferably with the aid of water, after curing of the reactive resin mortar.

2. Method according to Claim 1, **characterized in that** the component A₁) contains a water-soluble polymer selected from the group consisting of polyvinyl alcohols, polysaccharides or polyacrylamides or mixtures thereof.

3. Method according to either of Claims 1 and 2, **characterized in that** the component A₁) represents an anionic and/or cationic starch ether and/or cellulose ether.

4. Method according to Claim 3, **characterized in that** a cellulose ether selected from the group consisting of methyl-, hydroxymethyl-, hydroxyethyl-, hydroxypropyl-and carboxymethylcellulose ether or mixtures thereof are used as component A₁).

5. Method according to any of Claims 1 to 4, **characterized in that** the component A₁) contains an anionic starch ether selected from the group consisting of hydroxyethyl-, hydroxypropyl- and carboxyethyl ether or cationic starch ether, such as starch phosphonates or mixtures thereof.

6. Method according to Claim 5, **characterized in that** derivatives based on maize or potato starch or mixtures thereof are used as the starch ether.

7. Method according to any of Claims 1 to 6, **characterized in that** the component A₁) represents a polyvinyl alcohol having a degree of hydrolysis of 70 to 90 mol% and an ester number according to DIN 53401 of between 1 and 300 mg KOH/g.

8. Method according to any of Claims 1 to 7, **characterized in that** water-dispersible polymers, such as redispersible polymer powders, and/or aqueous polymer dispersions based on vinyl acetate, ethylene, styrene, versatate, butadiene, chloroprene, acrylic acid and acrylate monomers are used as component A₁).

9. Method according to any of Claims 1 to 8, **characterized in that** the component A₂) consists of an alcohol selected from the group consisting of ethanol, isopropanol, n-propanol and diacetone alcohol or any mixtures thereof.

10. Method according to any of Claims 1 to 9, **characterized in that** a glycol ether based on propylene glycol monomethyl ether, propylene glycol n-butyl ether, dipropylene glycol n-butyl ether or any mixtures thereof are used as component A₂).

11. Method according to any of Claims 1 to 10, **characterized in that** 0.1 to 10% by weight of additives, such as wax dispersions/emulsions, emulsifiers, impregnating agents, thickeners, wetting agents, preservatives and surface-active substances, are present in the protective layer (A) in addition to the components A₁), A₂) and optionally A₃).

12. Method according to any of Claims 1 to 11, **characterized in that** the protective layer (A) forms a cohesive film after evaporation of the water or of the evaporation accelerator.

13. Method according to any of Claims 1 to 12, **characterized in that** the cleaning in stage c) is carried out using steam-jet or high-pressure cleaners.

## Revendications

1. Procédé de réduction ou de suppression de la formation de tâches qui a lieu à la surface de pavés lors du jointoiement de revêtements de pavés avec des mortiers de résine composite, **caractérisé en ce que**
a) avant le jointoiement, une couche de protection (A) constituée de
A₁) 5 à 99,5 % en poids d'un polymère soluble dans l'eau et/ou dispersible dans l'eau,
A₂) 0,5 à 35 % en poids d'un accélérateur d'évaporation, choisi dans le groupe des alcools, des éthers de glycol, des cétones et leurs mélanges quelconques,
A₃) éventuellement de l'eau pour le restant,
est appliquée sur les pavés,
b) après le séchage de la couche de protection (A), le mortier de résine composite est introduit
et
c) après le durcissement du mortier de résine composite, la couche de protection (A) est nettoyée, ainsi que les résidus de résine composite adhérents, de préférence à l'aide d'eau.

2. Procédé selon la revendication 1, **caractérisé en ce que** le composant A₁) contient un polymère soluble dans l'eau choisi dans le groupe des alcools polyvinyliques, des polysaccharides ou des polyacrylamides ou leurs mélanges.

3. Procédé selon l'une quelconque des revendications 1 ou 2, **caractérisé en ce que** le composant A₁) est constitué d'un éther d'amidon anionique et/ou cationique, et/ou d'un éther de cellulose.

4. Procédé selon la revendication 3, **caractérisé en ce qu'**un éther de cellulose choisi dans le groupe des éthers de méthyl-, hydroxyméthyl-, hydroxyéthyl-, hydroxypropyl- et carboxyméthylcellulose ou leurs mélanges est utilisé en tant que composant A₁).

5. Procédé selon l'une quelconque des revendications 1 à 4, **caractérisé en ce que** le composant A₁) contient un éther d'amidon anionique choisi dans le groupe des éthers hydroxyéthylique, hydroxypropylique et carboxyéthylique, ou un éther d'amidon cationique tel que les phosphonates d'amidon ou leurs mélanges.

6. Procédé selon la revendication 5, **caractérisé en ce que** des dérivés à base d'amidon de pomme de terre ou de maïs ou leurs mélanges sont utilisés en tant qu'éther d'amidon.

7. Procédé selon l'une quelconque des revendications 1 à 6, **caractérisé en ce que** le composant A₁) est constitué d'un alcool polyvinylique ayant un degré de saponification de 70 à 90 % en moles et un indice d'ester selon DIN 53401 compris entre 1 et 300 mg KOH/g.

8. Procédé selon l'une quelconque des revendications 1 à 7, **caractérisé en ce que** des polymères dispersibles dans l'eau tels que des poudres polymères redispersibles et/ou des dispersions polymères aqueuses à base de monomères d'acétate de vinyle, d'éthylène, de styrène, de versatate, de butadiène, de chloroprène, d'acide acrylique et d'esters de l'acide acrylique sont utilisés en tant que composant A₁).

9. Procédé selon l'une quelconque des revendications 1 à 8, **caractérisé en ce que** le composant A₂) est constitué d'un alcool choisi dans le groupe de l'éthanol, l'isopropanol, le n-propanol et l'alcool diacétonique ou leurs mélanges quelconques.

10. Procédé selon l'une quelconque des revendications 1 à 9, **caractérisé en ce qu'**un éther de glycol à base d'éther monométhylique de propylène glycol, d'éther n-butylique de propylène glycol, d'éther n-butylique de dipropylène glycol ou leurs mélanges quelconques est utilisé en tant que composant A₂).

11. Procédé selon l'une quelconque des revendications 1 à 10, **caractérisé en ce que** 0,1 à 10 % en poids d'additifs, tels que des émulsions/dispersions de cire, des émulsifiants, des agents d'imprégnation, des agent épaississants, des agents mouillants, des conservateurs et des substances tensioactives, sont également présents dans la couche de protection (A) en plus des composants A₁), A₂) et éventuellement A₃).

12. Procédé selon l'une quelconque des revendications 1 à 11, **caractérisé en ce que** la couche de protection (A) forme un film compact après évaporation de l'eau ou de l'accélérateur d'évaporation.

13. Procédé selon l'une quelconque des revendications 1 à 12, **caractérisé en ce que** le nettoyage à l'étape c) est réalisé avec des agents de nettoyage à jet de vapeur ou à pression élevée.
